# EUROPEAN PATENT SPECIFICATION

(11) **EP 4 525 368 B1**
(45) Date of publication and mention of the grant of the patent: **17.09.2025**
(21) Application number: 24186155.8
(22) Date of filing: 03.07.2024
(51) Int. Cl.: H04L 9/40, G06F 21/62, H04L 9/00, H04L 9/08, H04L 9/14

(54) **METHOD FOR PROVIDING USER DATA ENCRYPTION KEY PROTECTION IN SIMPLE AUTHENTICATION ENVIRONMENT AND SYSTEM THEREOF**
VERFAHREN ZUR BEREITSTELLUNG VON BENUTZERDATENVERSCHLÜSSELUNGSSCHLÜSSELSCHUTZ IN EINER EINFACHEN AUTHENTIFIZIERUNGSUMGEBUNG UND SYSTEM DAFÜR
PROCÉDÉ DE FOURNITURE DE PROTECTION DE CLÉ DE CRYPTAGE DE DONNÉES D'UTILISATEUR DANS UN ENVIRONNEMENT D'AUTHENTIFICATION SIMPLE ET SYSTÈME ASSOCIÉ

(30) Priority: 14.09.2023 KR 20230122184
(43) Date of publication of application: 19.03.2025
(73) Proprietor: Samsung SDS Co., Ltd., Seoul (KR)
(72) Inventor: Park, Hyun Chul, 05510 SEOUL (KR)
(74) Representative: Glawe, Delfs, Moll

(56) References cited:
- CN-B- 111 447 214
- US-A1- 2017 093 805
- US-A1- 2017 250 974
- US-A1- 2022 014 503

## Description

### BACKGROUND

### 1. Technical Field

The present disclosure relates to a method for providing user data encryption key protection in a simple authentication environment and a system thereof, and more particularly, to a method for protecting user data by distributing and storing a user data encryption key and a system of performing the same.

### 2. Description of the Related Art

Since user data related to IT service users includes users' personal information, special attention should be required in view of security, whereby the user data is stored in a service server in an encrypted state.

In addition, user data should be protected using values that do not exist in a service system, such as how a decryption key is not stored in the service server, in order to minimize the leakage likelihood of the decryption key for decrypting encrypted data as much as possible.

In the related art, a password input by a service user at the time of login is converted, and user data is encrypted and decrypted based on the converted password. In this case, since the password input by the user is not stored in the service server, the leakage likelihood of the encryption key from a service server manager can be excluded.

However, at the current time when a login method, in which a simple authentication system is introduced, is performed, when there is no user's password input, a problem occurs in the existing method for protecting a user data encryption key.

The prior art is known from CN 111 447 214 B, which relates to the management of a public/private key pair and giving the user access to the private key based on fingerprint authentication and US 2017/093805 A1, which discloses a user device receiving a content encryption key, which is encrypted based on a master password, from a remote server.

Therefore, in order to solve the above problem, it is required to provide a method for protecting a user data encryption key even in a simple authentication environment having no password input.

### SUMMARY

The invention is defined by the appended claims. An object of the present disclosure is to provide a method for protecting a user data encryption key without inputting a password and a system for performing the same.

Another object of the present disclosure is to provide a method for protecting a user data encryption key by double encryption of the encryption key and a system for performing the same.

Other object of the present disclosure is to provide a method for effectively protecting a user data encryption key by distributing and storing the encryption key and a system for performing the same.

The objects of the present disclosure are not limited to those mentioned above and additional objects of the present disclosure, which are not mentioned herein, will be clearly understood by those skilled in the art from the following description of the present disclosure.

According to an aspect of an example embodiment of the present closure, there is provided a method for protecting a user data encryption key in a simple authentication environment, performed by a computing system. The method may include encrypting a private key, which is generated through a key management server, based on a password acquired from login information of a user terminal; receiving an authentication key, which is generated through the key management server, in response to a simple authentication registration request of the user terminal; decrypting the encrypted private key based on the password acquired from the login information; encrypting the decrypted private key based on the authentication key; and transmitting the encrypted private key to the user terminal.

In some embodiments, the encrypting the private key, which is generated through the key management server, based on the password acquired from login information of the user terminal may include converting the password acquired from the login information into a first password; and encrypting the private key generated through the key management server by using the first password.

In some embodiments, the receiving the authentication key, which is generated through the key management server, in response to a simple authentication registration request of the user terminal may include receiving a simple authentication registration request signal of the user terminal; receiving a credential ID from a simple authentication server in response to the simple authentication registration request signal of the user terminal; and requesting the key management server to generate the authentication key based on the credential ID, and receiving the authentication key from the key management server generated based on the credential ID.

In some embodiments, the credential ID is stored in the simple authentication server, and the authentication key is stored in the key management server.

In some embodiments, the method may further include storing the private key encrypted based on the authentication key in the user terminal.

In some embodiments, the method may further include receiving a simple authentication request from the user terminal; performing a user verification process through the user terminal in response to the simple authentication request; receiving, based on the user verification process being successful, the private key encrypted based on the authentication key from the user terminal; and receiving the authentication key from the key management server and decrypting the encrypted private key based on the authentication key.

In some embodiments, the performing a user verification process through the user terminal may include transmitting a credential ID received from a simple authentication server to the user terminal; and performing the user verification process through the user terminal by using the credential ID.

In some embodiments, the method may further include receiving user data including a personal information of a user from the user terminal; encrypting the user data based on a content key; encrypting the content key based on a public key generated through the key management server; and storing the encrypted content key.

In some embodiments, the encrypting the user data based on a content key may include generating and storing the content key; encrypting the user data received from the user terminal by using the stored content key; and storing the encrypted user data.

In some embodiments, the encrypting the content key based on a public key generated through the key management server may include requesting the key management server to transmit the generated public key; and encrypting the content key based on the public key received from the key management server, and the content key encrypted with the public key is decrypted with the private key generated through the key management server.

In some embodiments, the method may further include decrypting the encrypted content key by using the private key decrypted based on the authentication key; decrypting the encrypted user data by using the decrypted content key; and transmitting the decrypted user data to the user terminal.

According to another aspect of an example embodiment of the present closure, there is provided a system for protecting a user data encryption key in a simple authentication environment. The system may include one or more processors; and a memory configured to store instructions, wherein the one or more processors are configured to perform, by executing the stored instructions: encrypting a private key, which is generated through a key management server, based on a password acquired from login information of a user terminal; receiving an authentication key, which is generated through the key management server, in response to a simple authentication registration request of the user terminal; decrypting the encrypted private key based on the password acquired from the login information; encrypting the decrypted private key based on the authentication key; and transmitting the encrypted private key to the user terminal.

In some embodiments, the encrypting a private key generated through a key management server based on a password acquired from login information of a user terminal may include converting the password acquired from the login information into a first password; and encrypting the private key, which is generated through the key management server, by using the first password.

In some embodiments, the one or more processors may be further configured to perform, by executing the stored instructions: receiving a simple authentication registration request from the user terminal; performing a user verification process through the user terminal in response to the simple authentication request; receiving, based on the user verification process being successful, the private key encrypted based on the authentication key from the user terminal; and receiving the authentication key from the key management server and decrypting the encrypted private key based on the authentication key.

In some embodiments, the performing the user verification process through the user terminal may include transmitting a credential ID received from the simple authentication server to the user terminal; and performing the user verification process through the user terminal by using the credential ID.

In some embodiments, the one or more processors may be further configured to perform, by executing the stored instructions: receiving user data including a personal information of a user from the user terminal; encrypting the user data based on a content key; encrypting the content key based on a public key generated through the key management server; and storing the encrypted content key.

In some embodiments, the encrypting the user data based on the content key may include generating and storing the content key; encrypting the user data received from the user terminal by using the stored content key; and storing the encrypted user data.

In some embodiments, the encrypting the content key based on the public key generated through the key management server may include requesting the key management server to transmit the generated public key; and encrypting the content key based on the public key received from the key management server, and the content key encrypted with the public key is decrypted with the private key generated through the key management server.

In some embodiments, the one or processors may further perform decrypting the encrypted content key by using the private key decrypted based on the authentication key; decrypting the encrypted user data by using the decrypted content key; and transmitting the decrypted user data to the user terminal.

According to still another aspect of an example embodiment of the present closure, there is provided a non-transitory computer-readable recording medium storing a computer program, wherein the computer program is executable by at least one processor to perform: encrypting a private key, which is generated through a key management server, based on a password acquired from login information of a user terminal; receiving an authentication key, which is generated through the key management server, in response to a simple authentication registration request of the user terminal; decrypting the encrypted private key based on the password acquired from the login information; encrypting the decrypted private key based on the authentication key; and transmitting the encrypted private key to the user terminal.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a schematic view illustrating a system for protecting a user data encryption key in a simple authentication environment based on a service server according to one embodiment of the present disclosure;
FIG. 2 is a flow chart illustrating a simple authentication registration procedure in the present disclosure;
FIG. 3 is a detailed flow chart illustrating a process of encrypting a private key based on a password input by a user in the present disclosure;
FIG. 4 is a detailed flow chart illustrating a process of generating an authentication key in response to a user's simple authentication registration request in the present disclosure;
FIG. 5 is a detailed flow chart illustrating a process of decrypting an encrypted private key by a service server based on a first password;
FIG. 6 is a flow chart illustrating a process of performing a simple authentication procedure by a service server;
FIG. 7 is a detailed flow chart illustrating a process of receiving a simple authentication request by a service server from a user terminal;
FIG. 8 is a flow chart illustrating a process of storing user data in a service server;
FIG. 9 is a detailed flow chart illustrating a process of encrypting user data based on a content key according to one embodiment of the present disclosure;
FIG. 10 is a detailed flow chart illustrating a method of encrypting a content key by a service server based on a public key;
FIG. 11 is a flow chart illustrating a process of transmitting user data by a service server;
FIG. 12 is an exemplary view easily describing a method of encrypting a private key and a public key; and
FIG. 13 is an exemplary hardware schematic view illustrating a computing system according to some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, embodiments of the present disclosure will be described with reference to the attached drawings.

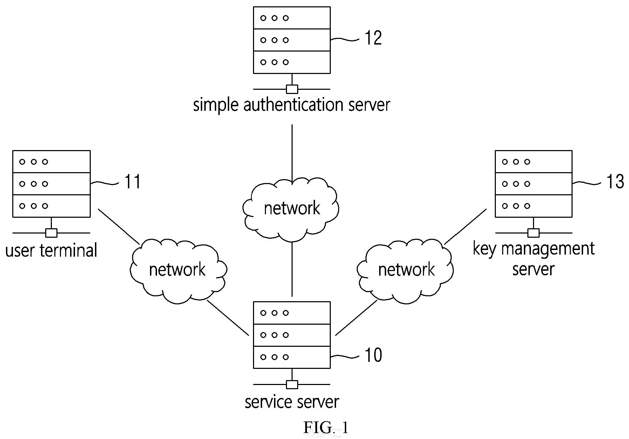

FIG. 1 is a schematic view illustrating a system for protecting a user data encryption key in a simple authentication environment based on a service server according to one embodiment of the present disclosure.

As shown in FIG. 1, the system for protecting a user data encryption key in a simple authentication environment may include a service server 10, a user terminal 11, a simple authentication server 12 and a key management server 13. The service server 10, which is a main server for protecting a user data encryption key in a simple authentication environment, may receive information related to user data from the user terminal 11, the simple authentication server 12 and the key management server 13, and in this case, the information related to user data may mean an encryption key.

In order to effectively protect the user data encryption key, the user data encryption key may be distributed and stored in the user terminal 11, the simple authentication server 12 and the key management server 13, and a process of encrypting and decrypting user data may be performed based on the service server 10. Details related to this process will be described in detail with reference to the drawings below.

Next, the user terminal 11 may request the service server 10 to perform procedures of login, simple authentication registration and simple authentication, and after simple authentication is completed, the user terminal 11 may request the service server 10 to store user data or call the user data stored in the service server.

Next, the simple authentication server 12 may play a role of assisting in performing the procedures of simple authentication registration and simple authentication of the service server. In detail, the simple authentication server 12 may manage credential ID, which is simple authentication registration information required in a process of verifying a service user. The service server 10 may receive an authentication key from the key management server 13 based on the credential ID, and a private key may be encrypted based on the authentication key. A detailed description related to this will be given with reference to the drawings below.

Finally, the key management server 13 may generate and manage a private key, a public key and an authentication key to protect a user data encryption key in the present disclosure. In this case, the key management server 13 may be performed separately from the service server 10 of the present disclosure.

In detail, since the user data encryption key is generated and managed in the key management server 13 and encrypted user data is stored in the service server 10, the encrypted user data and the encryption key may be stored in their separate servers. Therefore, according to the present disclosure, the service server and the key management server may be separated from each other, so that the user data may be effectively protected.

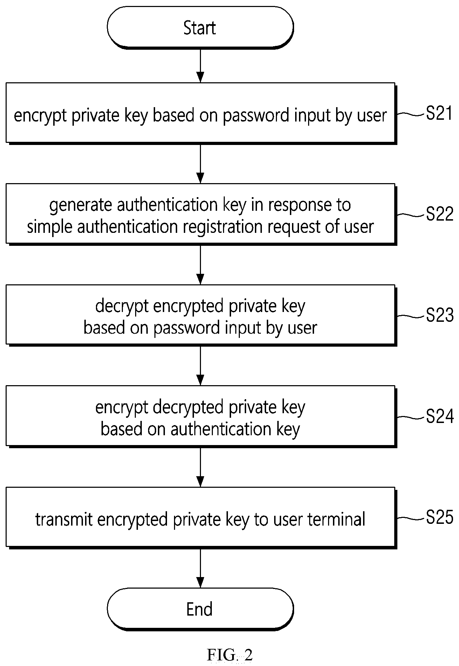

FIG. 2 is a flow chart illustrating a simple authentication registration procedure in the present disclosure.

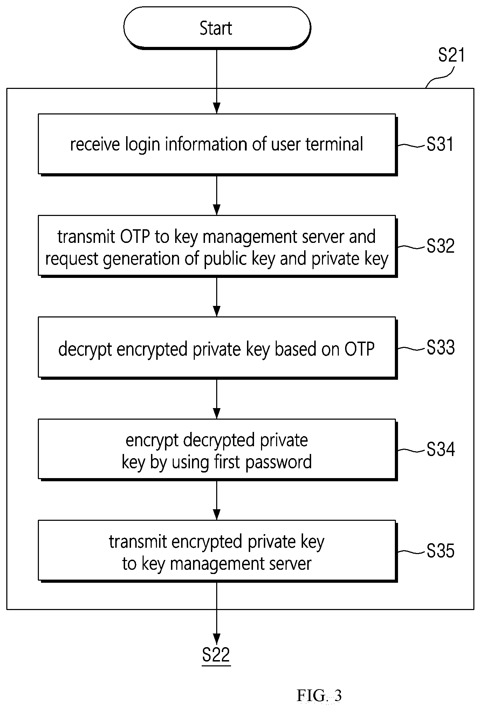

In step S21, the key management server may encrypt the private key based on a password input by a user. In this case, the password input by the user may mean a password input at the time of login, and the private key may be generated by the key management server. Also, when generating the private key, the key management server may generate not only the private key but also a public key paired with the private key. Hereinafter, a detailed description of encrypting the private key will be given with reference to FIG. 3.

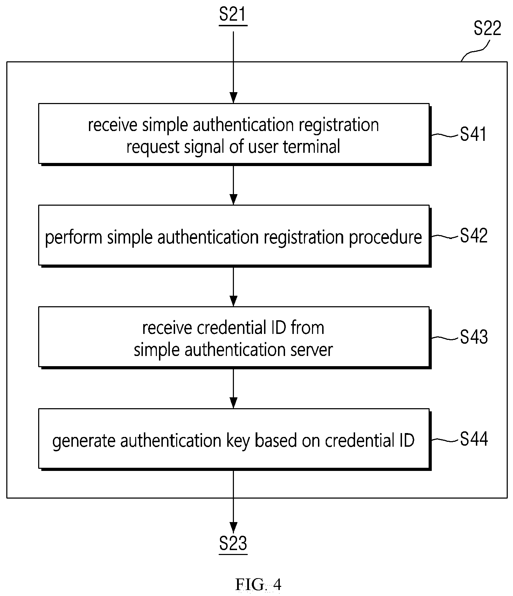

Next, in step S22, the key management server may generate an authentication key in response to a user's simple authentication registration request. In this case, the user's simple authentication registration request may be performed after the user's login, and the simple authentication may include user authentication using biometric recognition such as fingerprint, iris and face recognition. Hereinafter, a detailed description of generating the authentication key will be given with reference to FIG. 4.

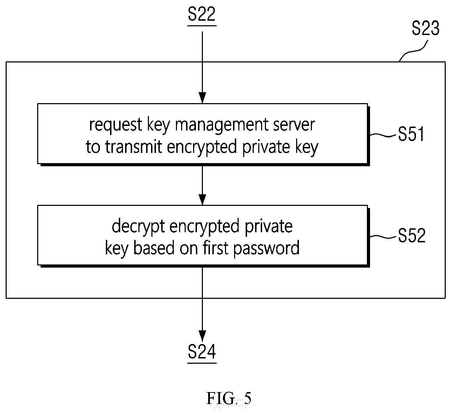

In step S23, the service server may decrypt the encrypted private key based on the password input by the user. In this case, the encrypted private key may mean an encrypted private key received by the service server from the key management server. In addition, the service server may decrypt the encrypted private key received from the key management server based on the password input by the user. Hereinafter, a detailed description will be given with reference to FIG. 5.

In step S24, the service server may encrypt the decrypted private key based on the authentication key. In detail, the service server may request the key management server to transmit the authentication key stored in the key management server, and when the service server receives the authentication key from the key management server, the service server may encrypt the decrypted private key based on the received authentication key.

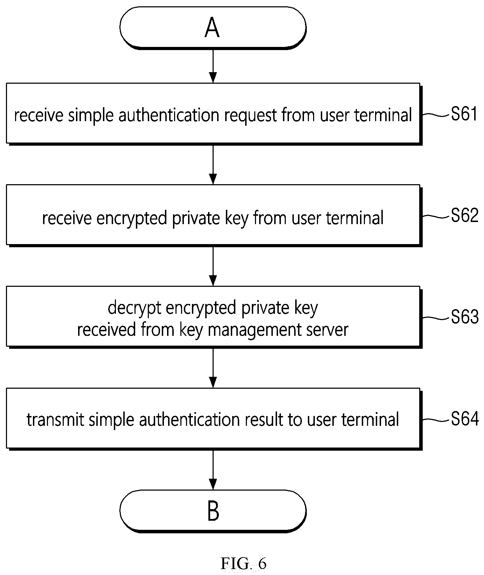

In step S25, the service server may transmit the encrypted private key to the user terminal. The encrypted private key transmitted to the user terminal may be stored in a storage space of the user terminal. As a result, the simple authentication registration procedure ends, and a subsequent simple authentication procedure will be described later in detail with reference to FIG. 6.

FIG. 3 is a detailed flow chart illustrating a process of encrypting a private key based on a password input by a user in the present disclosure.

In step S31, the service server may receive login information of the user terminal. In this case, the login information may mean ID, password, etc. of the user.

In detail, a second password may be derived from the password input during the user's login, so that the second password may be stored in the service server. The service server may verify the user's login by comparing the password input during the user's login with the second password. In this case, the second password may be stored in the service server.

In step S32, the service server may transmit an OTP to the key management server and request generation of a public key and a private key. In this case, the OTP may be for generating an encryption key pair, that is, a private key and a public key, and may be generated by the service server. Next, the service server may store the OPP, and may request the key management server to generate the private key and the public key while transmitting the generated OTP to the key management server.

Next, the key management server may generate the private key and the public key and encrypt the private key based on the OTP received from the service server. In this case, since the OTP may be a symmetric key, the private key encrypted based on the OTP may be decrypted based on the OTP. In addition, the key management server may transmit the private key encrypted based on the OTP to the service server.

In step S33, the service server may decrypt the encrypted private key based on the OTP. In detail, the service server may decrypt the encrypted private key received from the key management server based on the OTP stored in the service server.

In step S34, the service server may encrypt the private key decrypted based on the OTP by using the first password. In this case, the first password is different from the password input by the user during the user's login and may be converted from the password input by the user during the user's login.

That is, the service server may encrypt the decrypted private key by using the first password converted from the password acquired from the user's login information. In this case, since the first password is used for the purpose of encrypting and decrypting the private key, the first password may be stored in a cache memory only during a user login session without being stored in the service server. Also, for the same reason, the password input by the user will not be stored in the service server.

In step S35, the service server may transmit the private key encrypted based on the first password to the key management server. The key management server may store the private key encrypted based on the first password.

FIG. 4 is a detailed flow chart illustrating a process of generating an authentication key in response to a user's simple authentication registration request in the present disclosure.

In step S41, the service server may receive a simple authentication registration request signal of the user terminal. In detail, the user terminal may transmit the simple authentication registration request signal to the service server after logging in to a service. The service server may transmit the simple authentication registration request signal received from the user terminal to the simple authentication server.

In this case, the simple authentication registration procedure may be performed by a general Fast Identity Online (FIDO) registration procedure. FIDO is a technology that enhances security by separating authentication processes of a personal device and a server without storing the user's personal information in the server. Therefore, user verification may be performed in the user terminal. Since the FIDO technology may be easily understood by those skilled in the art to which data security pertains, its detailed description will be omitted.

Therefore, in step S43, when the user verification is successful in the user terminal, the service server may receive credential ID, which is information necessary for generating the authentication key, from the simple authentication server. In this case, the credential ID may mean simple authentication registration information generated by the simple authentication server when the user verification is successful, and the key management server may generate the authentication key based on the credential ID.

Next, in step S44, the service server may request the key management server to generate the authentication key based on the credential ID, and in response to the request of the service server, the key management server may generate and store the authentication key. In addition, the key management server may transmit the generated authentication key to the service server.

FIG. 5 is a detailed flow chart illustrating a process of decrypting an encrypted private key by a service server based on a first password.

First, in step S51, the service server may request the key management server to transmit the encrypted private key based on the first password. Then, the service server may receive the encrypted private key from the key management server and then decrypt the encrypted private key based on the first password.

That is, the service server may receive the encrypted private key from the key management server again based on the first password transmitted to the key management server and decrypt the encrypted private key by using the first password.

Next, the service server may receive the authentication key from the key management server, encrypt the private key based on the authentication key and transmit the encrypted private key to the user terminal. This has been described above in steps S24 and S25.

FIG. 6 is a flow chart illustrating a process of performing a simple authentication procedure by a service server.

First, in step S61, the service server may receive a simple authentication request from the user terminal. In this case, simple authentication may mean a login method different from a login method using ID and password of a user.

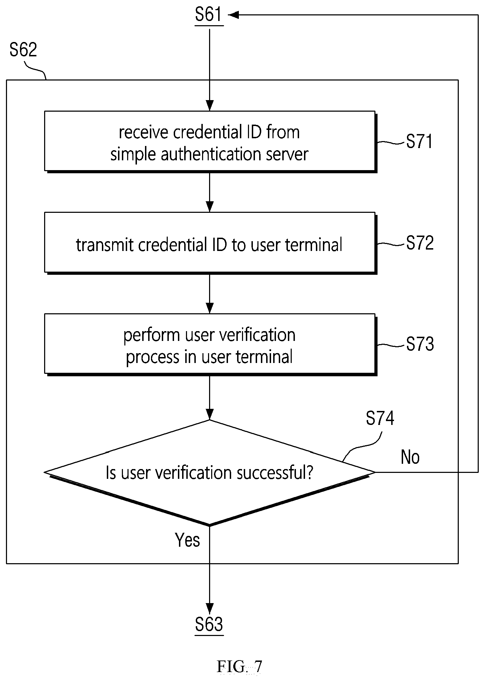

Next, the service server may transmit the simple authentication request signal received from the user terminal to the simple authentication server, and may transmit the credential ID received from the simple authentication server to the user terminal. A detailed description related to this will be given with reference to FIG. 7 below.

The user terminal may perform user verification based on the credential ID received from the service server, and when the user verification is successful, in step S62, the user terminal may transmit the result of the user verification and the private key encrypted with the authentication key to the service server. In addition, the service server may request the key management server to transmit the stored authentication key based on the credential ID received from the simple authentication server.

Next, in step S63, the service server may receive the authentication key from the key management server and decrypt the encrypted private key. That is, the service server may decrypt the encrypted private key received from the user terminal based on the authentication key received from the key management server.

Finally, in step S64, the service server may transmit a simple authentication result to the user terminal. In detail, when all of the simple authentication procedures of steps S61 to S63 are successfully performed, the service server may transmit a result that the simple authentication is successful to the user terminal. On the contrary, when there is a situation such as a failure of user verification or a situation that the encrypted private key is not decrypted by the authentication key, the service server may transmit a result that the simple authentication has failed may be transmitted to the user terminal.

FIG. 7 is a detailed flow chart illustrating a process of receiving a simple authentication request by a service server from a user terminal.

First, in step S71, the service server may receive the credential ID from the simple authentication server. In detail, the service server may transmit the simple authentication request signal received from the user terminal to the simple authentication server, and in response to the request signal, the service server may receive the credential ID, which is the simple authentication registration information, from the simple authentication server. Then, in step S72, the service server may transmit the credential ID received in step S71 to the user terminal.

Next, in step S73, the user terminal may perform user verification based on the credential ID received from the service server. When the user verification is successful, the service server may receive the encrypted private key from the user terminal in accordance with step S62.

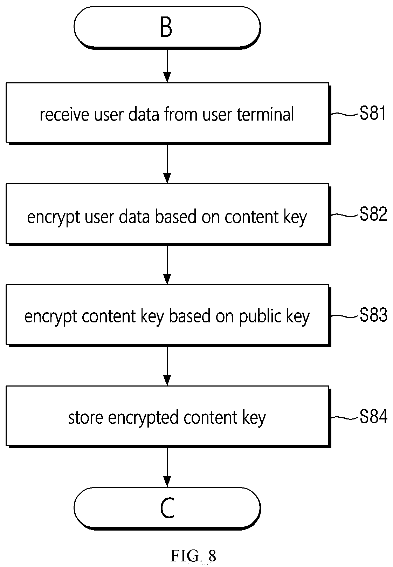

FIG. 8 is a flow chart illustrating a process of storing user data in a service server.

First, in step S81, the service server may receive a storage request signal of user data including a user's personal information from the user terminal. In addition, the storage request of the user data may be performed after the user terminal receives a result that the simple authentication has been successfully performed, from the service server.

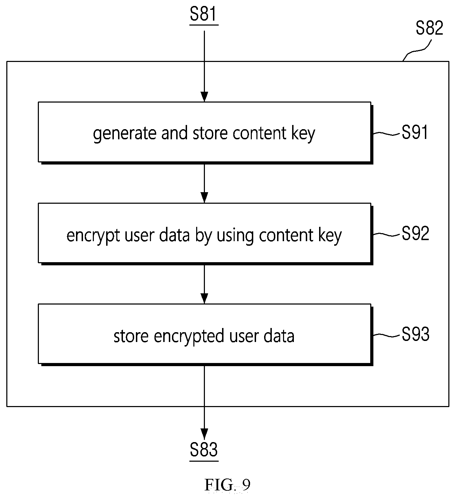

Next, in step S82, the service server may encrypt the user data based on a stored content key. In this case, the content key is generated by the service server, and the generated content key may be managed by the service server. Also, the content key may be for encrypting the user data, and a detailed description related thereto will be given later with reference to FIG. 9.

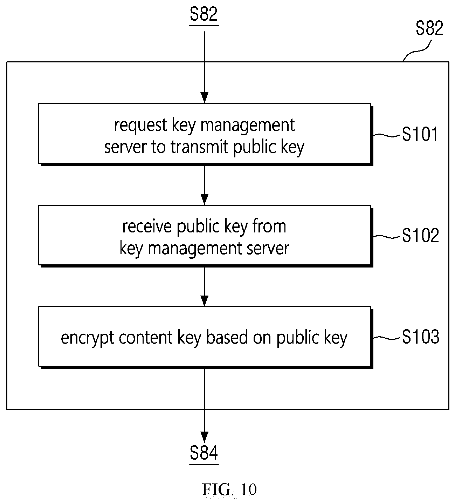

Next, in step S83, the service server may encrypt the content key based on the public key. In this case, there may be an effect of improving security by double-encrypting the user data encrypted in step S82. Also, the content key encrypted based on the public key may be later decrypted based on the private key. A detailed description related to this will be given later with reference to FIG. 10.

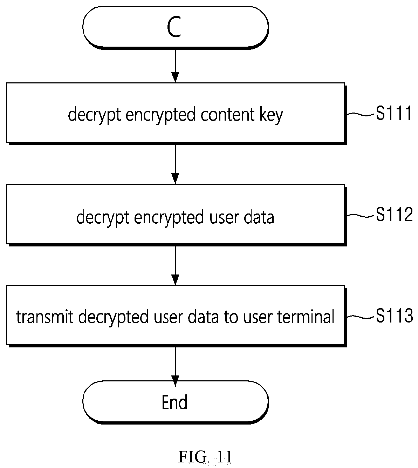

Finally, the content key encrypted in step S84 may be stored in the service server. In this case, not only the encrypted content key but also the user data encrypted based on the content key may be stored in the service server. Then, the encrypted content key and the encrypted user data may be decrypted and provided to the user terminal. A detailed description related to this will be given later with reference to FIG. 11.

FIG. 9 is a detailed flow chart illustrating a process of encrypting user data based on a content key according to one embodiment of the present disclosure.

After the service server receives the user data from the user terminal in step S81, the service server may generate and store a content key in step S91. **In** this case, the content key is a as a symmetric key, and may be used to encrypt and decrypt the user data.

In step S92, the service server may encrypt the user data received from the user terminal by using the generated content key. Also, the service server may store the user data encrypted in step S93.

FIG. 10 is a detailed flow chart illustrating a method of encrypting a content key by a service server based on a public key.

In step S101, the service server may request the key management server to transmit the public key stored in the key management server. In this case, the public key stored in the key management server may mean a public key generated by the key management server in a pair with the private key. In step S102, the service server may receive the public key from the key management server.

Finally, in step S103, the service server may encrypt the content key based on the public key received from the key management server. In addition, the service server may store the content key encrypted in step S84.

In summary, the content key for decrypting user data, the encrypted user data and the encrypted content key may be stored in the service server. Since the private key should be received from the key management server to decrypt the encrypted content key, the possibility of infringement of the user data may be reduced.

FIG. 11 is a flow chart illustrating a process of transmitting user data by a service server.

First, the user terminal may request the service server to transmit the stored user data. Then, the service server receives the request for transmitting the user data from the user terminal and performs a process for decrypting the encrypted user data.

In step S111, the service server may decrypt the encrypted content key based on the decrypted private key of step S63 in performing the simple authentication procedure. Then, in step S112, the service server may decrypt the encrypted user data based on the decrypted content key. Finally, in step S113, the service server may transmit the decrypted user data to the user terminal.

In accordance with the above method, the service server may decrypt the double encrypted user data, and in this case, the content key stored in the service server and the private key received from the user terminal may be used.

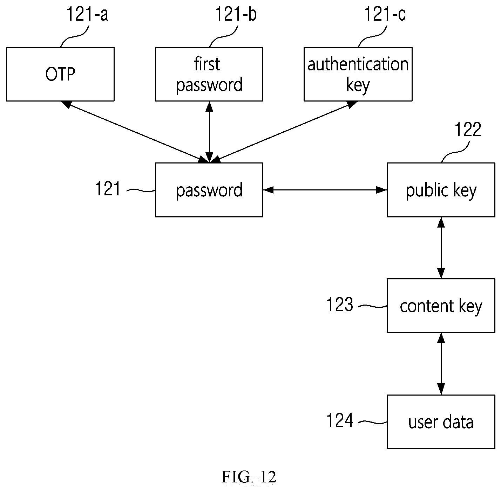

FIG. 12 is an exemplary view easily describing a method of encrypting a private key and a public key..

First, after the user's login procedure, a private key 121 and a public key 122 may be generated by the key management server. In this case, the private key 121 and the public key 122 are generated as a pair, and the data encrypted by the public key 122 may be decrypted by the private key 121.

First, the private key 121 may be encrypted based on an OTP 121-a through the key management server, and the private key 121 encrypted through the service server may be decrypted based on the OTP 121-a. In addition, the private key 121 decrypted through the service server may be encrypted based on a first password 121-b. In addition, the private key 121 encrypted through the service server may be decrypted based on the first password 121-b, and the private key decrypted based on the first password 121-b may be encrypted again based on an authentication key 121-c.

Finally, the service server may receive the authentication key 121-c from the key management server, and the encrypted private key 121 may be decrypted based on the authentication key 121-c. In this case, the finally decrypted private key 121 may decrypt a content key 123 encrypted based on the public key 122.

Next, the service server may receive user data 124 from the user terminal, and the user data 124 may be encrypted based on the content key 123 generated by the service server. Also, in this case, the content key 123 may be encrypted based on the public key 122 received by the service server from the key management server.

In accordance with the above mechanism, the user data is stored in the service server in an encrypted state, and keys for decrypting the encrypted user data may be divisionally stored in the service server and the key management server, whereby security may be enhanced in view of user data protection.

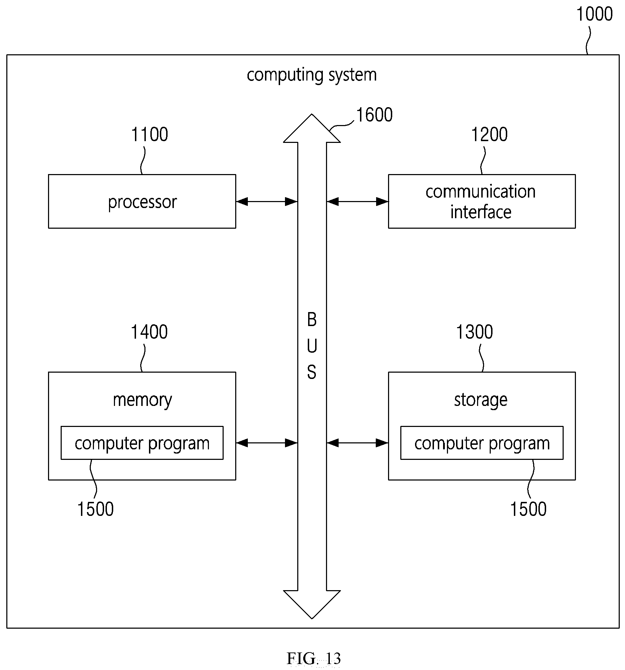

The method for protecting a user data encryption key in a simple authentication environment according to some embodiments of the present disclosure has been described with reference to FIGS. 1 to 12. Hereinafter, a hardware configuration of a system for protecting a user data encryption key in a simple authentication environment will be described with reference to FIG. 13.

FIG. 13 is an exemplary hardware schematic view illustrating a computing system 1000 according to some embodiments of the present disclosure. The computing system 1000 corresponds to a system 10 for protecting a user data encryption key in the above-described simple authentication environment.

As shown in FIG. 13, the computing system 1000 may include one or more processors 1100, a bus 1600, a communication interface 1200, a memory 1400 for loading a computer program 1500 performed by the processor 1100, and a storage 1300 for storing the computer program 1500.

However, only components related to the embodiment of the present disclosure are shown in FIG. 13. Therefore, those skilled in the art to which the present disclosure pertains may note that other general-purpose components may be further included in the computing system 1000 in addition to the components shown in FIG. 13. That is, the computing system 1000 may further include various components in addition to the components shown in FIG. 13. Also, in some cases, the computing system 1000 may be configured in a form in which some of the components shown in FIG. 13 are omitted. Hereinafter, each component of the computing system 1000 will be described.

The processor 1100 controls the overall operation of each component of the computing system 1000. The processor 1100 may include at least one of a Central Processing Unit (CPU), a Micro Processor Unit (MPU), a Micro Controller Unit (MCU), a Graphic Processing Unit (GPU), a Neural Processing Unit (NPU) or any type of processor well known in the technical field of the present disclosure. In addition, the processor 1100 may perform computation for at least one application or program for executing the method/operation according to the embodiments of the present disclosure. The computing system 1000 may include one or more processors.

Next, the memory 1400 may store various data, commands and/or information. The memory 1400 may load the computer program 1500 from the storage 1300 to execute the method/operation according to the embodiments of the present disclosure. The memory 1400 may be implemented as a volatile memory such as RAM, but the technical scope of the present disclosure is not limited thereto.

Next, the bus 1600 provides a communication function between the components of the computing system 1000. The bus 1600 may be implemented as various types of buses such as an address bus, a data bus and a control bus.

Next, the communication interface 1200 may support wired/wireless Internet communication of the computing system 1000. Also, the communication interface 1200 may support various communication methods other than Internet communication. To this end, the communication interface 1200 may include a communication module well known in the technical field of the present disclosure.

Next, the storage 1300 may non-temporarily store one or more computer programs 1500. The storage 1300 may include a non-volatile memory such as a Read Only Memory (ROM), an Erasable Programmable ROM (EPROM), an Electrically Erasable Programmable ROM (EEPROM) and a flash memory, a hard disk, a detachable disk or any type of computer-readable recording medium well known in the art to which the present disclosure pertains.

Next, the computer program 1500 may include one or more instructions that, when loaded into the memory 1400, cause the processor 1100 to perform the method/operation according to various embodiments of the present disclosure. That is, the processor 1100 may perform the method/operation according to various embodiments of the present disclosure by executing the one or more instructions.

For example, the computer program 1500 may include an instruction of encrypting a private key generated through a key management server based on a password acquired from login information of a user terminal, an instruction of generating an authentication key through the key management server in response to a simple authentication registration request of the user terminal, an instruction of decrypting the encrypted private key based on the password acquired from the login information, an instruction of encrypting the decrypted private key based on the authentication key, and an instruction of transmitting the encrypted private key to the user terminal.

The hardware configuration of the computing system 1000 according to some embodiments of the present disclosure has been described with reference to FIG. 13.

So far, a variety of embodiments of the present disclosure and the effects according to embodiments thereof have been mentioned with reference to FIGS. 1 to 13. The effects according to the technical idea of the present disclosure are not limited to the forementioned effects, and other unmentioned effects may be clearly understood by those skilled in the art from the description of the specification.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A method for protecting a user data encryption key in a simple authentication environment, performed by a computing system, the method comprising:
encrypting, by a key management server, a private key (121), which is generated through the key management server (13), based on a password acquired from login information of a user terminal (11);
receiving, by a service server (10) being separate from the key management server (13), an authentication key (121-c), which is generated through the key management server (13), in response to a simple authentication registration request of the user terminal (11);
decrypting, by the service server (10), the encrypted private key (121) based on the password acquired from the login information;
encrypting, by the service server (10), the decrypted private key (121) based on the authentication key (121-c); and
transmitting the private key (121) encrypted based on the authentication key to the user terminal (11).

2. The method of claim 1, wherein the encrypting the private key (121) based on the password includes:
converting the password acquired from the login information into a first password (121-b); and
encrypting the private key (121), generated through the key management server (13), by using the first password (121-b).

3. The method of claim 1, wherein the receiving the authentication key includes:
receiving a simple authentication registration request signal of the user terminal;
receiving a credential ID from a simple authentication server in response to the simple authentication registration request signal of the user terminal; and
requesting the key management server to generate the authentication key based on the credential ID, and receiving the authentication key from the key management server generated based on the credential ID.

4. The method of claim 3, wherein the credential ID is stored in the simple authentication server (12), and the authentication key (121-c) is stored in the key management server (13).

5. The method of claim 1, further comprising storing the private key (121) encrypted based on the authentication key (121-c) in the user terminal (11).

6. The method of claim 1, further comprising:
receiving a simple authentication request from the user terminal (11);
performing a user verification process through the user terminal (11) in response to the simple authentication request;
receiving, based on the user verification process being successful, the private key (121) encrypted based on the authentication key (121-c) from the user terminal (11); and
receiving the authentication key (121-c) from the key management server (13) and decrypting the encrypted private key (121) based on the authentication key (121-c).

7. The method of claim 6, wherein the performing the user verification process includes:
transmitting a credential ID received from a simple authentication server (12) to the user terminal (11); and
performing the user verification process through the user terminal (11) by using the credential ID.

8. The method of claim 6, further comprising:
receiving user data including a personal information of a user from the user terminal (11);
encrypting the user data based on a content key (123);
encrypting the content key (123) based on a public key (122) generated through the key management server (13); and
storing the encrypted content key (123).

9. The method of claim 8, wherein the encrypting the user data includes:
generating and storing the content key (123);
encrypting the user data received from the user terminal (11) by using the stored content key (123); and
storing the encrypted user data.

10. The method of claim 8, wherein the encrypting the content key (123) includes:
requesting the key management server (13) to transmit the generated public key (122); and
encrypting the content key (123) based on the public key (122) received from the key management server (13), and
wherein the content key (123) encrypted with the public key (122) is decrypted with the private key (121) generated through the key management server (13).

11. The method of claim 8, further comprising:
decrypting the encrypted content key (123) by using the private key (121) decrypted based on the authentication key (121-c);
decrypting the encrypted user data by using the decrypted content key (123); and
transmitting the decrypted user data to the user terminal (11).

12. A system for protecting a user data encryption key in a simple authentication environment, the system comprising:
one or more processors; and
a memory configured to store instructions,
wherein the one or more processors are configured to perform, by executing the stored instructions:
encrypting, by a key management server which is comprised in the system, a private key (121), which is generated through the key management server (13), based on a password acquired from login information of a user terminal (11);
receiving, by a service server (10) which is comprised in the system and is separate from the key management server (13),
an authentication key (121-c), which is generated through the key management server (13), in response to a simple authentication registration request of the user terminal (11);
decrypting, by the service server (10), the encrypted private key (121) based on the password acquired from the login information;
encrypting, by the service server (10), the decrypted private key (121) based on the authentication key (121-c); and
transmitting the private key (121) encrypted based on the authentication key to the user terminal (11).

13. The system of claim 12, wherein the one or more processors are further configured to perform, by executing the stored instructions:
receiving a simple authentication request from the user terminal (11);
performing a user verification process through the user terminal (11) in response to the simple authentication request;
receiving, based on the user verification process being successful, the private key (121) encrypted based on the authentication key (121-c) from the user terminal (11); and
receiving the authentication key (121-c) from the key management server (13) and decrypting the encrypted private key (121) based on the authentication key (121-c).

14. The system of claim 13, wherein the one or more processors are further configured to perform, by executing the stored instructions:
receiving user data including a personal information of a user from the user terminal (11);
encrypting the user data based on a content key (123);
encrypting the content key (123) based on a public key (122) generated through the key management server (13); and
storing the encrypted content key (123).

15. The system of claim 12, wherein the one or processors are further configured to perform, by executing the stored instructions:
decrypting the encrypted content key (123) by using the private key (121) decrypted based on the authentication key (121-c);
decrypting the encrypted user data by using the decrypted content key (123); and
transmitting the decrypted user data to the user terminal (11).

## Patentansprüche

1. Verfahren zum Schützen eines Benutzerdatenverschlüsselungsschlüssels in einer Umgebung für eine einfache Authentifizierung, das durch ein Rechensystem durchgeführt wird, wobei das Verfahren umfasst:
Verschlüsseln, durch einen Schlüsselverwaltungsserver, eines privaten Schlüssels (121), der durch den Schlüsselverwaltungsserver (13) erzeugt wird, basierend auf einem Kennwort, das aus Anmeldeinformationen eines Benutzerendgeräts (11) erfasst wird;
Empfangen, durch einen Dienstserver (10), der von dem Schlüsselverwaltungsserver (13) getrennt ist, eines Authentifizierungsschlüssels (121-c), der durch den Schlüsselverwaltungsserver (13) erzeugt wird, als Reaktion auf eine Registrierungsanforderung für eine einfache Authentifizierung des Benutzerendgeräts (11); Entschlüsseln, durch den Dienstserver (10), des verschlüsselten privaten Schlüssels (121) basierend auf dem aus den Anmeldeinformationen erfassten Kennwort;
Verschlüsseln, durch den Dienstserver (10), des entschlüsselten privaten Schlüssels (121) basierend auf dem Authentifizierungsschlüssel (121-c) und
Übertragen des basierend auf dem Authentifizierungsschlüssel verschlüsselten privaten Schlüssels (121) an das Benutzerendgerät (11) .

2. Verfahren nach Anspruch 1, wobei das Verschlüsseln des privaten Schlüssels (121) basierend auf dem Kennwort einschließt:
Konvertieren des aus den Anmeldeinformationen erfassten Kennworts in ein erstes Kennwort (121-b) und
Verschlüsseln des privaten Schlüssels (121), der durch den Schlüsselverwaltungsserver (13) erzeugt wird, durch Verwenden des ersten Kennworts (121-b).

3. Verfahren nach Anspruch 1, wobei das Empfangen des Authentifizierungsschlüssels einschließt:
Empfangen eines Signals einer Registrierungsanforderung für eine einfache Authentifizierung des Benutzerendgeräts;
Empfangen einer Berechtigungsnachweis-ID von einem Server für eine einfache Authentifizierung als Reaktion auf das Signal einer Registrierungsanforderung für eine einfache Authentifizierung des Benutzerendgeräts und Auffordern des Schlüsselverwaltungsservers, den Authentifizierungsschlüssel basierend auf der Berechtigungsnachweis-ID zu erzeugen, und
Empfangen des Authentifizierungsschlüssels vom Schlüsselverwaltungsserver, der basierend auf der Berechtigungsnachweis-ID erzeugt wird.

4. Verfahren nach Anspruch 3, wobei die Berechtigungsnachweis-ID in dem Server für eine einfache Authentifizierung (12) gespeichert wird und der Authentifizierungsschlüssel (121-c) in dem Schlüsselverwaltungsserver (13) gespeichert wird.

5. Verfahren nach Anspruch 1, das ferner ein Speichern des privaten Schlüssels (121), der basierend auf dem Authentifizierungsschlüssel (121-c) verschlüsselt ist, in dem Benutzerendgerät (11) umfasst.

6. Verfahren nach Anspruch 1, das ferner umfasst:
Empfangen einer Anforderung für eine einfache Authentifizierung von dem Benutzerendgerät (11);
Durchführen eines Benutzerverifizierungsprozesses durch das Benutzerendgerät (11) als Reaktion auf die Anforderung für eine einfache Authentifizierung;
Empfangen, basierend darauf, dass der Benutzerverifizierungsprozess erfolgreich ist, des privaten Schlüssels (121), der basierend auf dem Authentifizierungsschlüssel (121-c) verschlüsselt ist, von dem Benutzerendgerät (11) und
Empfangen des Authentifizierungsschlüssels (121-c) von dem Schlüsselverwaltungsserver (13) und Entschlüsseln des verschlüsselten privaten Schlüssels (121) basierend auf dem Authentifizierungsschlüssel (121-c).

7. Verfahren nach Anspruch 6, wobei das Durchführen des Benutzerverifizierungsprozesses einschließt:
Übertragen einer Berechtigungsnachweis-ID, die von einem Server für eine einfache Authentifizierung (12) empfangen wird, an das Benutzerendgerät (11) und
Durchführen des Benutzerverifizierungsprozesses durch das Benutzerendgerät (11) durch Verwenden der Berechtigungsnachweis-ID.

8. Verfahren nach Anspruch 6, das ferner umfasst:
Empfangen von Benutzerdaten, einschließlich einer persönlichen Information eines Benutzers, von dem Benutzerendgerät (11);
Verschlüsseln der Benutzerdaten basierend auf einem Inhaltsschlüssel (123);
Verschlüsseln des Inhaltsschlüssels (123) basierend auf einem öffentlichen Schlüssel (122), der durch den Schlüsselverwaltungsserver (13) erzeugt wird; und
Speichern des verschlüsselten Inhaltsschlüssels (123).

9. Verfahren nach Anspruch 8, wobei das Verschlüsseln der Benutzerdaten einschließt:
Erzeugen und Speichern des Inhaltsschlüssels (123) ;
Verschlüsseln der von dem Benutzerendgerät (11) empfangenen Benutzerdaten durch Verwenden des gespeicherten Inhaltsschlüssels (123) und Speichern der verschlüsselten Benutzerdaten.

10. Verfahren nach Anspruch 8, wobei das Verschlüsseln des Inhaltsschlüssels (123) einschließt:
Auffordern des Schlüsselverwaltungsservers (13), den erzeugten öffentlichen Schlüssel (122) zu übertragen; und
Verschlüsseln des Inhaltsschlüssels (123) basierend auf dem öffentlichen Schlüssel (122), der von dem Schlüsselverwaltungsserver (13) empfangen wird, und
wobei der mit dem öffentlichen Schlüssel (122) verschlüsselte Inhaltsschlüssel (123) mit dem durch den Schlüsselverwaltungsserver (13) erzeugten privaten Schlüssel (121) entschlüsselt wird.

11. Verfahren nach Anspruch 8, das ferner umfasst:
Entschlüsseln des verschlüsselten Inhaltsschlüssels (123) durch Verwenden des privaten Schlüssels (121), der basierend auf dem Authentifizierungsschlüssel (121-c) entschlüsselt ist;
Entschlüsseln der verschlüsselten Benutzerdaten durch Verwenden des entschlüsselten Inhaltsschlüssels (123) und
Übertragen der entschlüsselten Benutzerdaten an das Benutzerendgerät (11).

12. System zum Schützen eines Benutzerdatenverschlüsselungsschlüssels in einer Umgebung zur einfachen Authentifizierung, wobei das System umfasst:
einen oder mehrere Prozessor(en) und
einen Speicher, der dazu ausgelegt ist,
Anweisungen zu speichern,
wobei der eine oder die mehreren Prozessor(en) dazu ausgelegt ist/sind, durch Ausführen der gespeicherten Anweisungen durchzuführen:
Verschlüsseln, durch einen Schlüsselverwaltungsserver, der im System enthalten ist, eines privaten Schlüssels (121), der durch den Schlüsselverwaltungsserver (13) erzeugt wird, basierend auf einem Kennwort, das aus Anmeldeinformationen eines Benutzerendgeräts (11) erfasst wird;
Empfangen, durch einen Dienstserver (10), der im System enthalten und von dem Schlüsselverwaltungsserver (13) getrennt ist, eines Authentifizierungsschlüssels (121-c), der durch den Schlüsselverwaltungsserver (13) erzeugt wird, als Reaktion auf eine Registrierungsanforderung für eine einfache Authentifizierung des Benutzerendgeräts (11); Entschlüsseln, durch den Dienstserver (10), des verschlüsselten privaten Schlüssels (121) basierend auf dem aus den Anmeldeinformationen erfassten Kennwort;
Verschlüsseln, durch den Dienstserver (10), des entschlüsselten privaten Schlüssels (121) basierend auf dem Authentifizierungsschlüssel (121-c) und
Übertragen des basierend auf dem Authentifizierungsschlüssel verschlüsselten privaten Schlüssels (121) an das Benutzerendgerät (11) .

13. System nach Anspruch 12, wobei der eine oder die mehreren Prozessor(en) ferner dazu ausgelegt ist/sind, durch Ausführen der gespeicherten Anweisungen durchzuführen:
Empfangen einer Anforderung für eine einfache Authentifizierung von dem Benutzerendgerät (11); Durchführen eines Benutzerverifizierungsprozesses durch das Benutzerendgerät (11) als Reaktion auf die Anforderung für eine einfache Authentifizierung;
Empfangen, basierend darauf, dass der Benutzerverifizierungsprozess erfolgreich ist, des privaten Schlüssels (121), der basierend auf dem Authentifizierungsschlüssel (121-c) verschlüsselt ist, von dem Benutzerendgerät (11) und
Empfangen des Authentifizierungsschlüssels (121-c) von dem Schlüsselverwaltungsserver (13) und Entschlüsseln des verschlüsselten privaten Schlüssels (121) basierend auf dem Authentifizierungsschlüssel (121-c).

14. System nach Anspruch 13, wobei der eine oder die mehreren Prozessor(en) ferner dazu ausgelegt ist/sind, durch Ausführen der gespeicherten Anweisungen durchzuführen:
Empfangen von Benutzerdaten, einschließlich einer persönlichen Information eines Benutzers, von dem Benutzerendgerät (11);
Verschlüsseln der Benutzerdaten basierend auf einem Inhaltsschlüssel (123);
Verschlüsseln des Inhaltsschlüssels (123) basierend auf einem öffentlichen Schlüssel (122), der durch den Schlüsselverwaltungsserver (13) erzeugt wird; und
Speichern des verschlüsselten Inhaltsschlüssels (123).

15. System nach Anspruch 12, wobei der eine oder die mehreren Prozessor(en) ferner dazu ausgelegt ist/sind, durch Ausführen der gespeicherten Anweisungen durchzuführen:
Entschlüsseln des verschlüsselten Inhaltsschlüssels (123) durch Verwenden des privaten Schlüssels (121), der basierend auf dem Authentifizierungsschlüssel (121-c) entschlüsselt ist;
Entschlüsseln der verschlüsselten Benutzerdaten durch Verwenden des entschlüsselten Inhaltsschlüssels (123) und
Übertragen der entschlüsselten Benutzerdaten an das Benutzerendgerät (11).

## Revendications

1. Procédé de protection d'une clé de chiffrement de données utilisateur dans un environnement d'authentification simple, exécuté par un système informatique, le procédé comprenant :
le chiffrement, par un serveur de gestion de clé, d'une clé privée (121), qui est générée à travers le serveur de gestion de clé (13), sur la base d'un mot de passe acquis à partir d'informations de connexion d'un terminal utilisateur (11) ;
la réception, par un serveur de service (10) qui est séparé du serveur de gestion de clé (13),
d'une clé d'authentification (121-c), qui est générée à travers le serveur de gestion de clé (13), en réponse à une demande d'enregistrement d'authentification simple du terminal utilisateur (11) ;
le déchiffrement, par le serveur de service (10), de la clé privée (121) chiffrée sur la base du mot de passe acquis à partir des informations de connexion ;
le chiffrement, par le serveur de service (10), de la clé privée (121) déchiffrée sur la base de la clé d'authentification (121-c) ; et
la transmission de la clé privée (121) chiffrée sur la base de la clé d'authentification au terminal utilisateur (11).

2. Procédé selon la revendication 1, dans lequel le chiffrement de la clé privée (121) basé sur le mot de passe comprend :
la conversion du mot de passe acquis à partir des informations de connexion dans un premier mot de passe (121-b) ; et
le chiffrement de la clé privée (121), générée à travers le serveur de gestion de clé (13), en utilisant le premier mot de passe (121-b).

3. Procédé selon la revendication 1, dans lequel la réception de la clé d'authentification comprend :
la réception d'un signal de demande d'enregistrement d'authentification simple du terminal utilisateur ;
la réception d'un identifiant (ID) d'identité à partir d'un serveur d'authentification simple en réponse au signal de demande d'enregistrement d'authentification simple du terminal utilisateur ; et
la demande au serveur de gestion de clé de générer la clé d'authentification sur la base de l'ID d'identité, et la réception de la clé d'authentification à partir du serveur de gestion de clé généré sur la base de l'ID d'identité.

4. Procédé selon la revendication 3, dans lequel l'ID d'identité est stocké dans le serveur d'authentification simple (12), et la clé d'authentification (121-c) est stockée dans le serveur de gestion de clé (13).

5. Procédé selon la revendication 1, comprenant en outre le stockage de la clé privée (121) chiffrée sur la base de la clé d'authentification (121-c) dans le terminal utilisateur (11).

6. Procédé selon la revendication 1, comprenant en outre :
la réception d'une demande d'authentification simple à partir du terminal utilisateur (11) ;
l'exécution d'un processus de vérification d'utilisateur à travers le terminal utilisateur (11) en réponse à la demande d'authentification simple ;
la réception, sur la base du processus de vérification d'utilisateur qui est réussi, de la clé privée (121) chiffrée sur la base de la clé d'authentification (121-c) à partir du terminal utilisateur (11) ; et
la réception de la clé d'authentification (121-c) à partir du serveur de gestion de clé (13) et le déchiffrement de la clé privée (121) chiffrée sur la base de la clé d'authentification (121-c).

7. Procédé selon la revendication 6, dans lequel l'exécution du processus de vérification d'utilisateur comprend :
la transmission d'un ID d'identité reçu à partir d'un serveur d'authentification simple (12) au terminal utilisateur (11) ; et
l'exécution du processus de vérification d'utilisateur à travers le terminal utilisateur (11) en utilisant l'ID d'identité.

8. Procédé selon la revendication 6, comprenant en outre :
la réception de données utilisateur comprenant des informations personnelles d'un utilisateur à partir du terminal utilisateur (11) ;
le chiffrement de données utilisateur sur la base d'une clé de contenu (123) ;
le chiffrement de la clé de contenu (123) sur la base d'une clé publique (122) générée à travers le serveur de gestion de clé (13) ; et
le stockage de la clé de contenu (123) chiffrée.

9. Procédé selon la revendication 8, dans lequel le chiffrement des données utilisateur comprend :
la génération et le stockage de la clé de contenu (123) ;
le chiffrement des données utilisateur reçues à partir du terminal utilisateur (11) en utilisant la clé de contenu stockée (123) ; et
le stockage des données utilisateur chiffrées.

10. Procédé selon la revendication 8, dans lequel le chiffrement de la clé de contenu (123) comprend :
la demande au serveur de gestion de clé (13) de transmettre la clé publique générée (122) ; et
le chiffrement de la clé de contenu (123) sur la base de la clé publique (122) reçue à partir du serveur de gestion de clé (13), et
dans lequel la clé de contenu (123) chiffrée avec la clé publique (122) est déchiffrée avec la clé privée (121) générée à travers le serveur de gestion de clé (13).

11. Procédé selon la revendication 8, comprenant en outre :
le déchiffrement de la clé de contenu (123) chiffrée en utilisant la clé privée (121) déchiffrée sur la base de la clé d'authentification (121-c) ;
le déchiffrement des données utilisateur chiffrées en utilisant la clé de contenu (123) déchiffrée ; et
la transmission des données utilisateur déchiffrées au terminal utilisateur (11).

12. Système de protection d'une clé de chiffrement de données utilisateur dans un environnement d'authentification simple, le système comprenant :
un ou plusieurs processeurs ; et
une mémoire configurée pour stocker des instructions,
dans lequel les un ou plusieurs processeurs sont configurés pour exécuter, en exécutant les instructions stockées :
le chiffrement, par un serveur de gestion de clé qui est compris dans le système, d'une clé privée (121), qui est générée à travers le serveur de gestion de clé (13), sur la base d'un mot de passe acquis à partir d'informations de connexion d'un terminal utilisateur (11) ;
la réception, par un serveur de service (10) qui est compris dans le système et qui est séparé du serveur de gestion de clé (13), d'une clé d'authentification (121-c), qui est générée à travers le serveur de gestion de clé (13), en réponse à une demande d'enregistrement d'authentification simple du terminal utilisateur (11) ;
le déchiffrement, par le serveur de service (10), de la clé privée (121) chiffrée sur la base du mot de passe acquis à partir des informations de connexion ;
le chiffrement, par le serveur de service (10), de la clé privée (121) déchiffrée sur la base de la clé d'authentification (121-c) ; et
la transmission de la clé privée (121) chiffrée sur la base de la clé d'authentification au terminal utilisateur (11).

13. Système selon la revendication 12, dans lequel les un ou plusieurs processeurs sont configurés en outre pour exécuter, en exécutant les instructions stockées :
la réception d'une demande d'authentification simple à partir du terminal utilisateur (11) ;
l'exécution d'un processus de vérification d'utilisateur à travers le terminal utilisateur (11) en réponse à la demande d'authentification simple ;
la réception, sur la base du processus de vérification d'utilisateur qui est réussi, de la clé privée (121) chiffrée sur la base de la clé d'authentification (121-c) à partir du terminal utilisateur (11) ; et
la réception de la clé d'authentification (121-c) à partir du serveur de gestion de clé (13) et le déchiffrement de la clé privée (121) chiffrée sur la base de la clé d'authentification (121-c).

14. Système selon la revendication 13, dans lequel les un ou plusieurs processeurs sont configurés en outre pour exécuter, en exécutant les instructions stockées :
la réception de données utilisateur comprenant des informations personnelles d'un utilisateur à partir du terminal utilisateur (11) ;
le chiffrement de données utilisateur sur la base d'une clé de contenu (123) ;
le chiffrement de la clé de contenu (123) sur la base d'une clé publique (122) générée à travers le serveur de gestion de clé (13) ; et
le stockage de la clé de contenu (123) chiffrée.

15. Système selon la revendication 12, dans lequel les un ou des processeurs sont configurés en outre pour exécuter, en exécutant les instructions stockées :
le déchiffrement de la clé de contenu (123) chiffrée en utilisant la clé privée (121) déchiffrée sur la base de la clé d'authentification (121-c) ;
le déchiffrement des données utilisateur chiffrées en utilisant la clé de contenu (123) déchiffrée ; et
la transmission des données utilisateur déchiffrées au terminal utilisateur (11).
